# EUROPÄISCHE PATENTSCHRIFT

(11) **EP 0 355 549 B1**
(45) Veröffentlichungstag und Bekanntmachung des Hinweises auf die Patenterteilung: **03.03.1993**
(21) Anmeldenummer: 89114537.7
(22) Anmeldetag: 07.08.1989
(51) Int. Cl.: B29C 59/12, B05D 3/14

(54) **Selbsttragendes Flächengebilde mit wenigstens einer struckturierten Oberfläche**
Self-supporting sheet provided with at least one textured surface
Feuille autoportante pourvu d'au moins une surface structurée

(30) Priorität: 16.08.1988 DE 3827631
(43) Veröffentlichungstag der Anmeldung: 28.02.1990
(73) Patentinhaber: HOECHST AKTIENGESELLSCHAFT, 65926 Frankfurt am Main (DE)
(72) Erfinder: Bothe, Lothar, Dr., D-6500 Mainz-Gonsenheim (DE); Dallmann, Hermann, Dr., D-6200 Wiesbaden (DE); Dinter, Peter, D-6227 Oestrich-Winkel 3 (DE); Gribbin, John Derek, Dr., D-6229 Schlangenbad 2 (DE)

(56) Entgegenhaltungen:
- EP-A- 0 133 832
- EP-A- 0 279 371
- DE-A- 1 494 151
- JP-A- 6 393 365

## Beschreibung

Die vorliegende Erfindung betrifft ein selbsttragendes Flächengebilde enthaltend eine Substratschicht und einen strukturierten Überzug auf wenigstens einer Oberfläche der Substratschicht.

Die Erfindung betrifft ferner ein Verfahren zur Herstellung eines erfindungsgemäßen Flächengebildes mit einem strukturierten Überzug sowie einen festhaftenden und abriebfesten strukturierten Überzug auf einem Polymersubstrat.

Bei flächigen Formkörpern aus polymeren Werkstoffen wie z. B. Folien und Platten führen unzureichende Schlupf- und Reibungseigenschaften bei der Produktion und Weiterverarbeitung derselben zu einer Vielzahl unerwünschter Probleme. Hierbei sind sowohl die Haft- und Gleitreibungen und das Blocken gegeneinander als auch gegen Führungs- oder Umlenkelemente wie z. B. Walzen gemeint.

Eine üblicherweise geeignete Maßnahme zur Lösung dieses Problems besteht darin, in das Material der Substratschicht Inertteilchen einzuarbeiten, die zu einer bestimmten Oberflächenstruktur führen und sich damit positiv auf das Gleitverhalten des Formkörpers auswirken. Beispiele für derartige Inertteilchen, die entweder während der Herstellung des Thermoplasten oder über ein Masterbatch während der Herstellung des Formkörpers eingearbeitet werden können, sind anorganische natürliche oder synthetische Verbindungen wie BaSO₄, CaCO₃, TiO₂, SiO₂, Kaolin, Ca-Phosphate etc. oder organische Partikel, z. B. aus vernetzten oder gehärteten Polymeren. Die Konzentrationen bewegen sich hierbei innerhalb weiter Grenzen, d. h. im Bereich von 0,001 bis 5,0 Gew.-%.

Wie bereits erwähnt kann durch diese Maßnahme eine deutliche Verbesserung der Gleiteigenschaften der Formkörper erzielt werden, was sich auch positiv auf den Gebrauchswert der daraus hergestellten Gegenstände auswirkt.

Nachteilig hierbei ist jedoch, daß die Inertpartikel vor der Einarbeitung einem sehr aufwendigen, kostenintensiven Aufbereitungsprozeß zur Einstellung der auf die jeweils geforderte Oberflächenrauhigkeit abgestimmten Korngrößenverteilung und Einarbeitung in die Matrix unterzogen werden müssen, um andersartige Nachteile wie z. B. einen erhöhten Abrieb beim Kontakt mit Führungselementen und dergleichen auszuschließen. Hinzu kommt, daß in manchen Fällen auch die optischen Eigenschaften der Substrate negativ beeinflußt werden können.

In EP-A-0 153 853 wird eine Magnetbandträgerfolie mit einer netzförmigen, feine Partikel enthaltenden Beschichtung beschrieben, die ihr die notwendigen Reibungseigenschaften verleihen soll. Dieses Verfahren erfordert das Zusammenmischen der Beschichtungsmaterialien wie z. B. der kolloidalen Silikate mit den polymeren Bindemitteln sowie das Aufbringen derselben auf die Oberfläche des Substrats zwischen den einzelnen Orientierungsschritten. Nachteilig an diesem Verfahren ist u. a., daß die Ausbildung der Strukturen wenigstens einen Streckschritt voraussetzt, d. h. mit dem Herstellungsprozeß der Folie verknüpft ist.

Aufgabe der vorliegenden Erfindung war es, gut handhabbare Flächengebilde wie Folien, Platten und dergleichen mit schlupffördernden Oberflächen zu schaffen, wobei die schlupffördernden Substanzen und die daraus resultierenden Strukturen unabhängig vom Herstellungsprozeß aufgebracht werden können und trotzdem eine gute Verankerung auf dem Substrat aufweisen.

Gelöst wird diese Aufgabe durch ein Flächengebilde der eingangs genannten Gattung, dessen Kennzeichenmerkmal darin zu sehen ist, daß der strukturierte Überzug durch Behandlung wenigstens einer Oberfläche der Substratschicht durch eine elektrische Coronaentladung hergestellt wird, die zwischen einer spannungsführenden und einer Gegenelektrode abläuft, wobei gleichzeitig während der Coronaentladung in den Coronaentladungsraum ein Aerosol eingebracht wird, enthaltend partikelförmige inerte Teilchen.

Für die Substratschicht können im Rahmen der vorliegenden Erfindung prinzipiell alle Materialien eingesetzt werden, bei denen die eingangs erwähnten Schwierigkeiten bei der Verarbeitung infolge zu glatter Oberflächen bestehen, insbesondere Polymere, die in Form ebener, flächiger Gebilde wie Folien oder Platten vorgelegt werden können.

Beispiele für Polymere sind insbesondere Polymerfolien, z.B. Folien aus natürlichen und synthetischen Polymeren wie Cellulose, Celluloseester, Polyvinylchlorid, Polystyrol, Styrolcopolymere mit Butadien, Polycarbonat, Polymere und Copolymere von Olefinen wie Ethylen, Propylen, Butylen, Methylpenten usw., Polysulfon, aliphatischen und aromatischen Polyestern, Polyimiden, Polyisobutylen, Polymethylmethacrylat, Polyphenylensulfid, Polyurethan, Polyamid, Polyaryletherketon, Polyaryletheretherketon, Polyarylethersulfon, Polyamidimid, Polyetherimid usw. (vgl. Ullmanns Encyclopädie der technischen Chemie, Verlag Chemie, Weinheim, 4. neubearbeitete und erweiterte Auflage (1976), Seite 673 ff; Encyclopedia of Polymer Science and Eng., Vol. 7, John Wiley & Sons (1973), Seite 73 ff). Die Herstellung von selbsttragenden, orientierten oder nicht orientierten Folien aus den genannten Polymeren erfolgt nach verschiedenen bekannten Technologien, die in der zitierten Literatur ebenfalls beschrieben sind, wobei unter dem Begriff selbsttragende Folie sowohl Monofolien aus einer Schicht wie auch Mehrschichtfolien aus mehreren Schichten aus gleichen oder verschiedenen Polymermaterialien oder Laminate enthaltend Schichten aus Kunststoffen und aus Nichtkunststoffen wie z.B. Papier oder Metall zu verstehen sind.

Der strukturierte Überzug auf der Substratschicht entsteht durch das gleichzeitige Einwirken einer elektrischen Coronaentladung in Anwesenheit eines Aerosols auf die Substratoberfläche. Durch die Coronaentladung werden Reaktionsmechanismen ausgelöst und begünstigt, die eine chemische Oberflächenmodifizierung des behandelten Substrats zur Folge haben. Man stellt sich vor, daß durch die Coronaentladung das Aerosol bzw. die darin enthaltenen Mittel auf der Substratoberfläche festhaftend verankert werden.

Die spannungsführende Elektrode wird für die Coronaentladung von einem Hochspannungsgenerator mit einer Wechselspannung zwischen 5 000 und 25 000 V beaufschlagt. Die zwischen der spannungsführenden Elektrode und der geerdeten Gegenelektrode anliegende Wechselspannung soll dabei proportional zu der Transportgeschwindigkeit sein, mit der sich das zu behandelnde Substrat durch die Coronaentladungszone bewegt, d.h. bei höherer Transportgeschwindigkeit soll sich die Wechselspannung im oberen Bereich bewegen, während bei geringeren Transportgeschwindigkeiten eine mittlere bis niedrige Spannung im Bereich von 5 000 bis 18 000 V eingestellt werden kann, um eine gleich große Wirkung zu erzielen.

Die Herstellung der Aerosole kann mit Hilfe bekannter Zweistoff-Zerstäubungsdüsen oder bevorzugt mittels piezoelektrischer Ultraschall-Zerstäubungssysteme erfolgen. Zur Herstellung der Aerosole können Gemische, bevorzugt Dispersionen von inerten Partikeln anorganischer oder organischer Zusammensetzung eingesetzt werden, die in Löse- und Dispersionsmitteln, bevorzugt in Wasser, vorliegen.

Ein Verfahren zur Behandlung der Oberflächen von Kunststoffsubstraten mittels Coronaentladung bei gleichzeitiger Aerosolbesprühung sowie eine Anordnung zur Durchführung dieses Verfahrens sind in allen Einzelheiten bereits in der DE-A-37 05 482 angegeben.

Beispiele für inerte Partikel sind anorganische Partikel wie hochdisperse Kieselsäuren, Al-, Ti-, Zr-Oxyde bzw. kolloidale Lösungen derselben, die je nach Art ihrer Herstellung unterschiedliche Größe und Gestalt aufweisen können. Die durch Hydrolyse der Umsetzungsprodukte von Metallhalogeniden mit organischen Verbindungen wie z. B. Alkoholen in alkoholischem, wässrigen, ammoniakalischem Milieu erhaltenen monodispersen Oxyde haben z. B. eine kugelförmige Gestalt und weisen z. T. eine enge Korngrößenverteilung auf. Sie sind somit zur Verbesserung der Gleiteigenschaften hochwertiger Substrate wie z. B. von Magnetbandträgerfolien besonders geeignet. Weitere Beispiele für anorganische Partikel sind Molybdensulfid, Fluoride von Salzen wie CaF₂, LiF, feindisperses CaCO₃ etc.

Beispiele für organische inerte Partikel sind u. a. die in der EP-A-0 101 080 beschriebenen Polymerkügelchen, die in der EP-A-0 125 482 beschriebenen mit Divinylbenzol vernetzten Acrylatpartikel oder die in der DE-A-25 01 123 beschriebenen Maleinsäureanhydrid-Copolymeren.

Zusätzlich zu den inerten Partikeln kann in dem Aerosol vorzugsweise auch noch ein Bindemittel enthalten sein. Als Bindemittel können nieder- bzw. hochmolekulare Substanzen eingesetzt werden, z. B. Gelatine, Polyvinylalkohole, Cellulosederivate, z. B. Carboxymethylcellulose, feine wasserdispergierbare oder wasserlösliche Copolyester oder Copolyesterether, die gegebenenfalls alkalimetallhaltige Bausteine wie z. B. Natriumsalz der 5-Sulfoisophthalsäure in Mengen von 1 bis 50 Mol-% enthalten können. Auch siloxan- und acrylathaltige Copolymere inklusive solche, die vernetzbar sind, z. B. mit Melamin, sowie Polyurethane, Polyolefine oder Ionomere, die in Wasser dispergiert sind, sind geeignete Bindemittel. Über die Auswahl der nieder- bzw. hochmolekularen Substanzen können dem Substrat neben den erfindungsgemäß angestrebten Gleiteigenschaften weitere wertvolle Oberflächeneigenschaften wie verbesserte Haftung gegenüber aufgebrachten Materialien, Siegelfähigkeit etc. verliehen werden.

Die aufzubringende Menge an Bindemittel und Partikeln sowie das Mischungsverhältnis kann in weiten Grenzen variiert werden und wird vorzugsweise auf den jeweils vorliegenden Anwendungsfall abgestimmt.

Nach dem erfindungsgemäßen Verfahren werden die strukturbildenden Mittel zunächst in einem Löse- oder Dispersionsmittel dispergiert, wobei bevorzugt ein wäßriges oder wasserhaltiges Löse- oder Dispersionsmittel zur Anwendung kommt, und dann wird die Dispersion zusammen mit einem Trägergasstrom in den Coronaentladungsraum als Aerosol versprüht. Die Dispersionen weisen im allgemeinen einen Feststoffgehalt von 0,5 bis 20 Gew.-% auf, bezogen auf das Gesamtgewicht der Dispersion. Es kann von Vorteil sein, zur Verbesserung der Dispergierbarkeit die Temperatur der Dispergiermittel zu erhöhen.

Als Trägergas wird im einfachsten Fall Luft eingesetzt, es kann aber auch Stickstoff oder ein anderes inertes Gas, z.B. ein Edelgas, eingesetzt werden. Besonders vorteilhafte Verankerungseffekte können andererseits auch mit reaktionsfähigen Gasen wie beispielsweise mit Halogenen, Kohlendioxid, Ammoniak oder Formaldehyd, gegebenenfalls in Mischung mit inerten Gasen, erzielt werden.

Der strukturierte Überzug kann nach dem erfindungsgemäßen Verfahren nach der Fertigstellung der Substratschicht, off-line, auf diese aufgebracht werden, dies gilt insbesondere, wenn plattenförmige Substratschichten überzogen werden sollen. Der strukturierte Überzug kann jedoch genausogut auch während des Herstellungsprozesses der Substratschicht, in-line, aufgebracht werden. Bekanntlich werden z. B. biaxial orientierte Folien aus thermoplastischen Kunststoffen durch Extrudieren einer Schmelze, nachfolgendes biaxiales Streckorientieren und anschliessendes Hitzefixieren hergestellt. Dabei kann der strukturierte Überzug vor, zwischen oder nach den einzelnen in aufeinanderfolgender Reihenfolge ablaufenden Streckschritten aufgebracht werden oder vor oder nach der Hitzefixierung.

Aufgrund des besonderen erfindungsgemäßen Auftragverfahrens weist der strukturierte Überzug eine gute Haftung auf der Substratoberfläche auf. Die Schichtdicke des strukturierten Überzugs entspricht üblicherweise einem Flächengewicht im Bereich von ca. 1 bis 500 mg/m².

Als Verwendungszweck für die erfindungsgemäßen Flächengebilde eignen sich alle Anwendungsgebiete, bei denen gute Gleiteigenschaften wünschenswert sind. Besonders erwähnt sei zum Beispiel der Einsatz von Verpackungsfolien auf schnellaufenden Verpackungsmaschinen oder Folien für technische Anwendungen wie z. B. Magnetbandfolien oder Kondensatordielektrika oder Trägerfolien für reprografische oder fotografische Anwendungen.

Durch die nachfolgenden Beispiele sollen die Erfindung und die damit zu erreichenden nacharbeitbaren Vorteile noch deutlicher beschrieben werden.

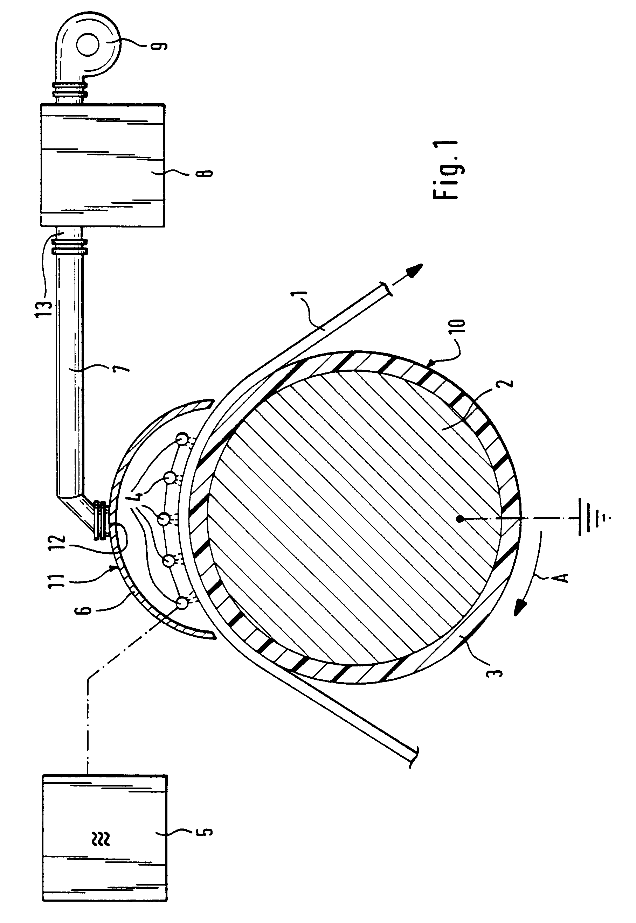

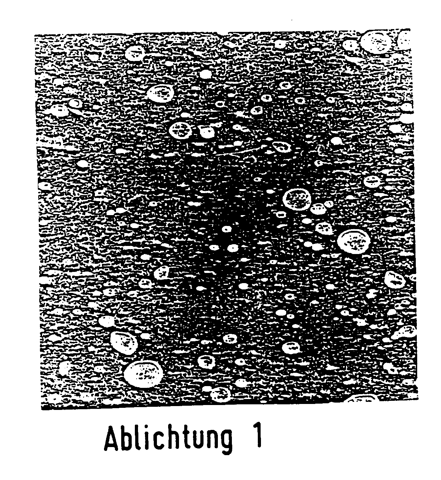

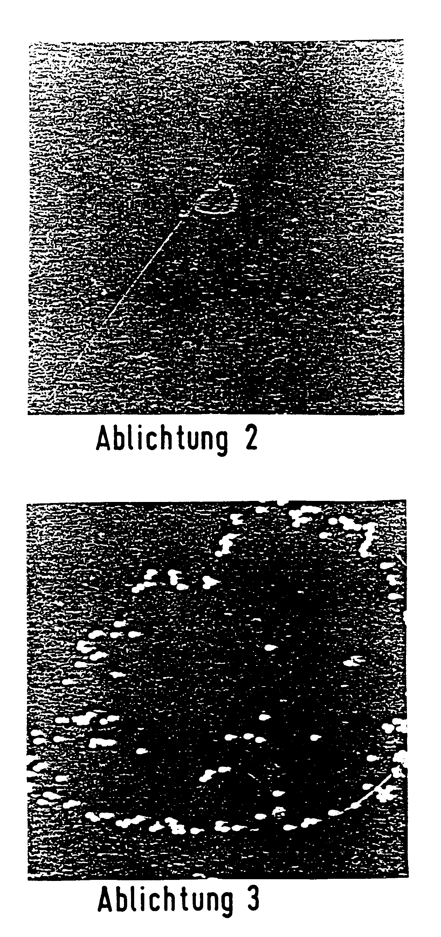

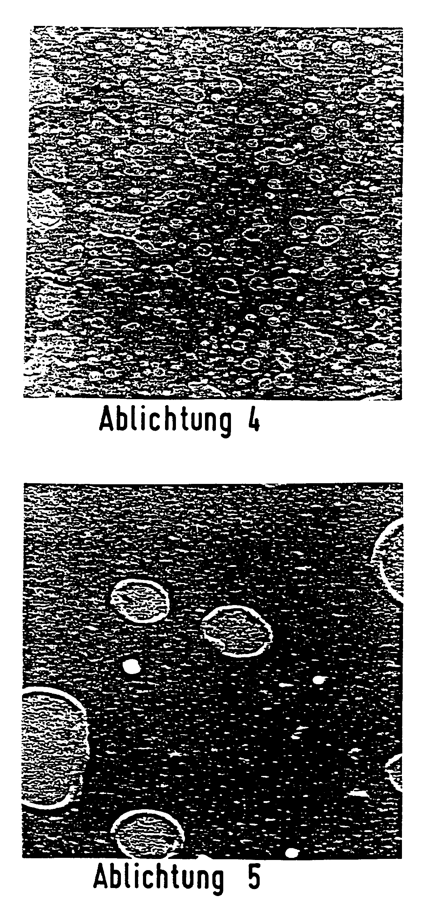

Mittels einer Aerosol-Corona-Vorrichtung entsprechend der beigefügten Figur 1 wurden verschiedene Polymerfolien behandelt. Die Vorrichtung besteht aus einem Generator 5 und einer Coronaentladungseinrichtung 11. Der Generator beaufschlagt die Entladungselektroden 4 der Coronaentladungseinrichtung 11 mit einem hochfrequenten Wechselstrom hoher Spannung. Als geerdete Gegenelektrode dient der Metallkern 2 einer Walze 10, über deren Umfangsbeschichtung 3 die selbsttragende Polymerfolienbahn 1 transportiert wird. Ein Gehäuse 6 umschließt die Elektroden 4 der Coronaentladungseinrichtung 11 und ist über eine Leitung 7 mit einer Zerstäubereinrichtung 8 verbunden, in der eine wäßrige Flüssigkeit zu einem schwebefähigen Aerosol mittels eines piezoelektrisch arbeitenden Ultraschallsystems zerstäubt wird. Ein Gebläse 9 ist an die Zerstäubungseinrichtung angeschlossen und befördert das Trägergas (Luft) für das Aerosol durch die Zerstäubungseinrichtung hindurch in die Coronaentladungseinrichtung 11.

Die Transportgeschwindigkeit der selbsttragenden Polymerfolien beträgt, wenn nicht anders vermerkt, 20 m/min. Die Coronaleistung betrug jeweils 1 000 W (entsprechend einer Einstellung von 5 500 V).

Die Oberflächenrauhigkeit wurde durch Messungen nach DIN 4768 bestimmt.

Zur Bildung einer Substratschicht wurde ein pigmentfreier Polyesterrohstoff mit einem SV-Wert von 810 aufgeschmolzen, mittels einer Breitschlitzdüse zu einer Folie geformt, die dann auf einer gekühlten, hochglanzpolierten Walze zu einer amorphen Folie abgeschreckt wurde. Die amorphe Vorfolie wurde bei 95 °C längsgestreckt und anschließend bei 110 °C quergestreckt, wobei das Flächenstreckverhältnis 13 betrug. Die erhaltene 15 µm starke Folie wurde anschließend bei 210 °C (Folientemperatur) thermofixiert. Die Folie wurde anschließend unter Verwendung der beschriebenen Vorrichtung beschichtet.

### Beispiel 1

Die Folie wurde mit einer 5%igen wäßrigen Lösung eines Copolyesters aus Terephthalsäure, Adipinsäure und einem Na-Salz einer Sulfoisophthalsäure, die 10 Gew.-%, bezogen auf den Feststoffgehalt, eines kolloidalen SiO₂ mit einer mittleren Teilchengröße von 20 nm enthielt, während der Coronaentladung beschichtet. Die Ablichtung 1 zeigt eine rasterelektronenmikroskopische Aufnahme der Oberfläche der erhaltenen Folie bei 300facher Vergrößerung. Auf dieser Aufnahme ist deutlich zu erkennen wie eine Strukturierung entstanden ist, bei der große und kleine, mehr oder weniger kreisförmige Strukturen in rein zufälliger Anordnung über die gesamte Oberfläche der Substratschicht verteilt sind, entsprechend dem Auftreffen jeweils größerer oder kleinerer Aerosoltröpfchen. Die Haft- und Gleitreibungszahl (DIN 53 375) der Folie betrug 33.

### Beispiel 2

Die Folie wurde mit einer 4%igen Dispersion von kugelförmigen, acrylathaltigen, durch Emulsionspolymerisation hergestellten Polymerteilchen mit einem mittleren Durchmesser von 0,2 µm bei enger Verteilung während der Coronaentladung beschichtet. Die Ablichtungen 2 und 3 zeigen rasterelektronenmikroskopische Aufnahmen der Folienoberfläche bei 300- und 3 000facher Vergrößerung. Auf der Ablichtung 2 sind lediglich die Umrisse mehrerer sehr unregelmäßiger, ringförmiger Strukturen erkennbar.

Die Ablichtung 3 zeigt die Folienoberfläche in 3 000facher Vergrößerung. Bei dieser Ablichtung sind jetzt deutlich die einzelnen Polymerteilchen in Form von kleinen Kugeln zu erkennen sowie ihre Anordnung auf der Oberfläche der Polyesterfolie zueinander. Offensichtlich sammeln sich bei diesem Überzugssystem die Mehrzahl der inerten Teilchen im Bereich der Randzone der von einem Aerosoltröpfchen getroffenen Folienoberfläche an. Zur Verbesserung der Haftung der Polymerteilchen auf der Trägerfolie wurde eine wäßrige copolyesterhaltige Dispersion derselben mit einem Feststoffgehalt von 5 Gew.-% aufgetragen, wobei die Konzentration der Polymerteilchen 10 Gew.-% betrug.

### Beispiel 3

Auf die Folie wurde eine wäßrige copolyesterhaltige Dispersion, die 10 Gew.-% an kolloidalen SiO₂-Partikeln und 1 Gew.-% an Polymerpartikeln, jeweils bezogen auf den Gesamtfeststoffgehalt der Dispersion, während der Coronaentladung aufgetragen. Die Ablichtungen 4 und 5 zeigen rasterelektronenmikroskopische Aufnahmen der Folienoberfläche bei 300- und 3 000facher Vergrößerung. Auf der Ablichtung 4 sind die Polymerteilchen nicht zu erkennen, jedoch in 3 000facher Vergrößerung wird offenbar, daß bei diesem Überzugssystem die Kugeln nicht innerhalb des von dem Siliciumdioxid eingenommenen Bereichs der Folienoberfläche angeordnet sind. Die nach DIN 53 375 ermittelten Haft- und Gleitreibungen der Folie betrugen 35.

## Patentansprüche

1. Selbsttragendes Flächengebilde enthaltend eine Substratschicht und einen strukturierten Überzug auf wenigstens einer Oberfläche der Substratschicht, dadurch gekennzeichnet, daß der strukturierte Überzug durch Behandlung wenigstens einer Oberfläche der Substratschicht durch eine elektrische Coronaentladung hergestellt wird, die zwischen einer spannungsführenden und einer Gegenelektrode abläuft, wobei gleichzeitig während der Coronaentladung in den Coronaentladungsraum ein Aerosol eingebracht wird, enthaltend partikelförmige inerte Teilchen.

2. Flächengebilde nach Anspruch 1, dadurch gekennzeichnet, daß es als Substratschicht eine Folie aus thermoplastischem Kunststoff enthält, insbesondere eine biaxial orientierte Polyesterfolie oder eine biaxial orientierte Poypropylenfolie.

3. Flächengebilde nach einem der Ansprüche 1 oder 2, dadurch gekennzeichnet, daß die Coronaentladung mit einer Wechselspannung zwischen 5 000 und 25 000 V betrieben wird.

4. Flächengebilde nach einem der Ansprüche 1 bis 3, dadurch gekennzeichnet, daß die Transportgeschwindigkeit, mit der sich das zu behandelnde Substrat durch die Coronaentladungszone bewegt, proportional zu der Höhe der Wechselspannung ist, mit der die Coronaentladung betrieben wird.

5. Flächengebilde nach einem der Ansprüche 1 bis 4, dadurch gekennzeichnet, daß die Herstellung der Aerosole mittels Zweistoff-Zerstäubungsdüsen oder bevorzugt mittels piezoelektrischer Ultraschall-Zerstäubungssysteme erfolgt.

6. Flächengebilde nach einem der Ansprüche 1 bis 5, dadurch gekennzeichnet, daß als inerte Partikel anorganische oder organische Partikel, vorzugsweise hochdisperse Partikel, eingesetzt werden.

7. Flächengebilde nach einem der Ansprüche 1 bis 6, dadurch gekennzeichnet, daß in dem Aerosol zusätzlich ein Bindemittel enthalten ist.

8. Flächengebilde nach Anspruch 7, dadurch gekennzeichnet, daß als Bindemittel nieder- bzw. hochmolekulare Substanzen eingesetzt werden, wie z. B. Gelatine, Polyvinylalkohole, Cellulosederivate, wasserdispergierbare oder wasserlösliche Copolyester oder Copolyesterether, acrylathaltige Copolymere, Polyurethane, Polyolefine oder Ionomere.

9. Verfahren zum Herstellen eines Flächengebildes nach einem der Ansprüche 1 bis 8, bei dem die strukturbildenden Mittel zunächst in einem Löse- oder Dispersionsmittel dispergiert werden und wobei dann die Dispersion zusammen mit einem Trägergasstrom in den Coronaentladungsraum als Aerosol versprüht wird, dadurch gekennzeichnet, daß die Dispersionen einen Feststoffgehalt von 0,5 bis 20 Gew.-% aufweisen, bezogen auf das Gesamtgewicht der Dispersion.

10. Guthaftender strukturierter überzug auf einem Flächengebilde nach einem der Ansprüche 1 bis 8, dadurch gekennzeichnet, daß er eine Schichtdicke besitzt, die einem Flächengewicht im Bereich von 1 bis 500 mg/m² entspricht.

## Claims

1. A self-supporting sheet-like structure containing a substrate layer and a structured coating on at least one surface of the substrate layer, wherein the structured coating is produced by treating at least one surface of the substrate layer by means of an electric corona discharge, which takes place between a live electrode and a counter-electrode, an aerosol containing discrete inert particles simultaneously being introduced into the corona discharge space during the corona discharge.

2. A sheet-like structure as claimed in claim 1, which contains, as the substrate layer, a film of a thermoplastic, in particular a biaxially oriented polyester film or a biaxially oriented polypropylene film.

3. A sheet-like structure as claimed in claim 1 or 2, wherein the corona discharge is operated at an alternating current voltage between 5,000 and 25,000 V.

4. A sheet-like structure as claimed in any of claims 1 to 3, wherein the transport velocity at which the substrate to be treated moves through the corona discharge zone is proportional to the level of the alternating current voltage at which the corona discharge is operated.

5. A sheet-like structure as claimed in any of claims 1 to 4, wherein the aerosols are produced using two-material atomizing nozzles or preferably by means of piezoelectric ultrasonic atomizing systems.

6. A sheet-like structure as claimed in any of claims 1 to 5, wherein the inert particles used are inorganic or organic particles, preferably finely divided particles.

7. A sheet-like structure as claimed in any of claims 1 to 6, wherein the aerosol additionally contains a binder.

8. A sheet-like structure as claimed in claim 7, wherein the binder used is a low molecular weight or high molecular weight substance, such as, for example, gelatine, a polyvinyl alcohol, a cellulose derivative, a water-dispersible or water-soluble copolyester or copolyester ether, an acrylate-containing copolymer, a polyurethane, a polyolefin or an ionomer.

9. A process for the production of a sheet-like structure as claimed in any of claims 1 to 8, in which the structure-forming agents are first dispersed in a solvent or dispersant and the dispersion together with a carrier gas stream is then sprayed into the corona discharge space as an aerosol, wherein the dispersions have a solids content of from 0.5 to 20% by weight, based on the total weight of the dispersion.

10. A firmly adhering structured coating on a sheet-like structure as claimed in any of claims 1 to 8, which has a layer thickness which corresponds to a weight per unit area in the region of 1 to 500 mg/m².

## Revendications

1. Structure plane autoporteuse contenant une couche de support et un revêtement texturé sur au moins une surface de la couche de support, caractérisée en ce que le revêtement texturé est produit par traitement d'au moins une surface de la couche de support par une décharge électrique en couronne qui se produit entre une électrode sous tension et une contre-électrode, un aérosol contenant des particules inertes séparées étant en même temps introduit dans l'espace de décharge en couronne, pendant la décharge en couronne.

2. Structure plane selon la revendication 1, caractérisée en ce qu'elle contient, en tant que couche de support, une pellicule à base d'une matière synthétique thermoplastique, en particulier une pellicule de polyester orientée biaxialement ou une pellicule de polypropylène orientée biaxialement.

3. Structure plane selon la revendication 1 ou 2, caractérisée en ce que la décharge en couronne est effectuée avec une tension alternative comprise entre 5 000 et 25 000 V.

4. Structure plane selon l'une des revendications 1 à 3, caractérisée en ce que la vitesse de transport, à laquelle le support à traiter se déplace à travers la zone de décharge en couronne, est proportionnelle à la valeur de la tension alternative avec laquelle s'effectue la décharge en couronne.

5. Structure plane selon l'une des revendications 1 à 4, caractérisée en ce que la préparation de l'aérosol est effectuée au moyen de buses pour la pulvérisation de deux matériaux, ou de préférence au moyen de systèmes de pulvérisation à ultrasons piézo-électriques.

6. Structure plane selon l'une des revendications 1 à 5, caractérisée en ce que, en tant que particules minérales ou particules organiques inertes, on utilise de préférence des particules fortement dispersées.

7. Structure plane selon l'une des revendications 1 à 6, caractérisée en ce qu'en outre un liant est contenu dans l'aérosol.

8. Structure plane selon la revendication 7, caractérisée en ce que, en tant que liant, on utilise des substances à faibles masses moléculaires ou à masses moléculaires élevées, par exemple, la gélatine, des poly(alcool vinylique)s, des dérivés de la cellulose, des copolyesters ou copolyester-éthers solubles dans l'eau ou dispersables dans l'eau, des copolymères contenant des acrylates, des polyuréthannes, polyoléfines ou ionomères.

9. Procédé pour la fabrication d'une structure plane selon l'une des revendications 1 à 8, dans lequel les agents formant la texture sont d'abord dispersés dans un solvant ou dispersant, et la dispersion étant ensuite pulvérisée, sous forme d'aérosol, conjointement avec un flux de gaz vecteur, dans l'espace de décharge en couronne, caractérisé en ce que les dispersions présentent une teneur en matière sèche de 0,5 à 20 % en poids, par rapport au poids total de la dispersion.

10. Revêtement texturé bien adhérent sur une structure plane selon l'une des revendications 1 à 8, caractérisé en ce qu'il présente une épaisseur de couche qui correspond à un poids par unité de surface dans la plage de 1 à 500 mg/m².
